# EUROPEAN PATENT APPLICATION

(11) **EP 4 717 550 A2**
(43) Date of publication of application: **01.04.2026**
(21) Application number: 25204135.5
(22) Date of filing: 23.09.2025
(51) Int. Cl.: B61L 15/00

(54) **SYSTEM AND METHOD FOR SELECTIVELY SECURING WIRELESS VEHICLE COMMUNICATIONS**

(30) Priority: 25.09.2024 US 202418896518
(71) Applicant: Transportation IP Holdings, LLC, Norwalk, CT 06851 (US)
(72) Inventor: Norris, Justin Taylor, Erie (US); Loch, Mark Elliott, Fairview (US)
(74) Representative: K&L Gates LLP

(57) **Abstract**

A method is disclosed that includes receiving information from an information source and determining whether the received information has information of a type to be encrypted before transmitting the received information to a second communication device. Based at least in part on the determination, the method may include either encrypting the information of the type to be encrypted, generating encrypted information, and transmitting the received information including the encrypted information from the first communication device to the second communication device; or transmitting the received information from the first communication device to the second communication device unencrypted.

## Description

### BACKGROUND

### Technical Field.

The subject matter described herein relates to security measures for communications, including the selective encryption of information based on various parameters.

### Discussion of Art.

Communications between vehicles (e.g., automobiles, planes, boats, trains, tanks, drones, submarines, etc.) can facilitate efficient operation, especially when such vehicles are convoyed or coupled together. For example, in a convoy, it may be desirable for a rear vehicle to communicate meaningful information about a route to other vehicles in the convoy, such as a lead vehicle. Coupled vehicles such as trains often utilize end-of-train ("EOT") communication devices and a head-of-train ("HOT") communication devices to relay important information to and from an EOT vehicle and a HOT vehicle. Reliable communications between EOT and HOT communication devices may be desired, especially for long freight trains, where visual and manual checks may be impractical.

Certain transmissions between EOT and HOT communication devices require compliance to certain standards. For example, Association of American Railroads ("AAR") Standard S-9152 requires that certain information, such as battery condition, valve circuit status, marker light status, brake status and pressure, be transmitted via open broadcast. In other words, such information must be transmitted in an unencrypted format in order to comply with such standards. The standards and regulations may not address the secure transmission of other information, such as between an EOT and HOT communication devices

The term "spoofing" refers to the deliberate act of sending false or misleading signals to intentionally deceive control systems. If conventional systems transmit unencrypted information via open broadcast transmissions to comply with governing standards, then conventional systems cannot provide encrypted source identifying information. This renders conventional systems vulnerable to interference by a malevolent actor because, without encryption, source identifying information may be relatively more easily spoofed. It may be desirable to have systems and methods related to selectively securing wireless vehicle communications that differs from those that are currently available.

### BRIEF DESCRIPTION

In one or more aspects, a method includes receiving information from an information source by a first communication device and determining whether the received information includes information of a type to be encrypted before transmitting the received information to a second communication device. If it is determined that the received information includes information of a type to be encrypted, the method can include encrypting the information of the type to be encrypted, generating encrypted information, and transmitting the received information including the encrypted information from the first communication device to the second communication device. If it is determined that the received information includes information of a type not to be encrypted, the method can include transmitting the received information from the first communication device to the second communication device unencrypted. Transmission of the received information from the first communication device to the second communication device can be authorized by an arming code assigned to the first communication device and verified by the second communication device.

In one or more aspects, a system includes a first communication device with a transmitter and a control circuit and a memory. The memory can store instructions that, when executed by the control circuit, cause the first communication device to receive information from an information source, determine whether the received information includes information of a type to be encrypted before transmitting the received information to a second communication device that is remotely located from the first communication device. If it is determined that the received information includes information of a type to be encrypted, the instructions, when executed by the control circuit, can cause the first communication device to encrypt the information of the type to be encrypted, generating encrypted information, and cause the transmitter to transmit the received information including the encrypted information from the first communication device to the second communication device. If it is determined that the received information includes information of a type not to be encrypted, the instructions, when executed by the control circuit, can cause the transmitter to transmit the received information from the first communication device to the second communication device unencrypted. Transmission of the received information from the first communication device to the second communication device is authorized by an arming code assigned to the first communication device.

In one or more aspects, a method includes obtaining plural data types from a vehicle, the plural data types including a first data type and a second data type, encrypting the second data type, transmitting both the first data and the second data type from the vehicle to a receiver, and decrypting the encrypted second data type.

### BRIEF DESCRIPTION OF THE DRAWINGS

Reference is made to the accompanying drawings in which similar components are indicated using the same reference numbers, and in which:
Figure 1 illustrates a system diagram of a system for selectively securing wireless vehicle communications, according to one embodiment;
Figure 2 illustrates a system diagram of another system for selectively securing wireless vehicle communications, according to one embodiment;
Figure 3 illustrates a block diagram of a first and second communication device, according to one embodiment;
Figure 4 illustrates an algorithmic flow diagram of a method of selectively securing wireless vehicle communications, according to one embodiment;
Figure 5 illustrates an algorithmic flow diagram of a method of encrypting information, as used by the method of Figure 4, according to one embodiment; and
Figure 6 illustrates an algorithmic flow diagram of another method of selectively securing wireless vehicle communications, according to one embodiment.

### DETAILED DESCRIPTION

Various aspects of the disclosure relate to various systems and methods for selectively securing wireless communications. A system and method is provided to selectively secure wireless communications. In one embodiment, transmissions between communication devices both comply with governing standards and protect information. This may reduce the risk of third-party interception, misuse, and interference with vehicle communications.

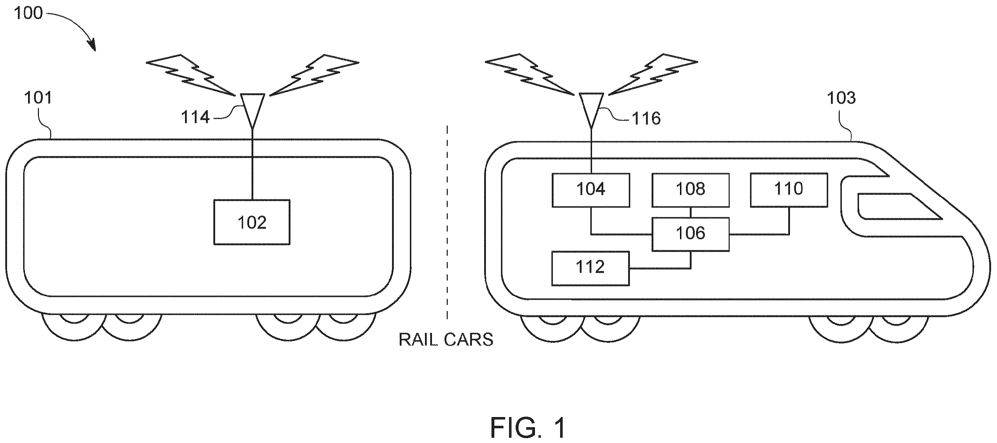

Referring to Figure 1, a diagram shows a system 100 for selectively securing wireless vehicle communications depicted in accordance with one embodiment. According to the non-limiting example shown in Figure 1, the system may include a first vehicle 101 coupled to a second vehicle 103. In this example, the first vehicle is an EOT rail vehicle and the second vehicle is a HOT rail vehicle of a train. In other embodiments one or more additional vehicles may be coupled to and/or between the EOT vehicle and the HOT vehicle.

While rail vehicles are used to illustrate examples, other suitable vehicles may include automobiles, aircraft, marine vessels, agricultural and construction equipment, mining vehicles, and the like. These vehicles may communicate with each other, and in some cases with stationary equipment that is located wayside. These vehicles may be a system that is formed of either a single vehicle or from multiple vehicles, and when multiple vehicles are present in a vehicle system, they may be mechanically coupled in some examples and in other examples are not mechanically coupled together. For example, a vehicle system can be formed from two or more logically or virtually coupled vehicles that are not mechanically connected with each other but whose movements are coordinated with each other. The logical coupling can be provided via communication pathways between the vehicles, such as those disclosed herein. Vehicles that are logically coupled can communicate with each other (e.g., wirelessly) so that the vehicles can coordinate their respective movements with each other to cause the vehicles to move together along routes (e.g., as a convoy, swarm, fleet, consist, and the like).

The first vehicle may include a first communication device 102 communicatively coupled to a first transceiver 114. The second vehicle may include a second communication device 104 communicatively coupled to a second transceiver 116. According to other non-limiting aspects of this disclosure, either the first or second communication device may utilize a separate transmitter and/or receiver, as desired.

The first communication device can communicate information to and from the second communication device and the second communication device can communicate information to and from the first communication device. Such communications may be established via an arming process, wherein the first and second communication devices are placed into a pairing or arming mode. An operator may provide the second communication device with an arming code via a user interface of the second communication device. The arming code, for example, may include a unique identifier associated with the first communication device of the EOT vehicle. For example, each EOT vehicle has a unique and permanent identification code that is transmitted along with a message to the second communication device of the HOT vehicle. In one embodiment, the arming code may be stored in a memory of the first communication device and/or presented on a display coupled to the first communication device.

The second communication device may attempt to establish a communication link via the second transceiver based on a provision of the arming code. A suitable link may be an ultra-high radio frequency link, a cellular link, a Wi-Fi link, a satellite link, and the like.) In one embodiment, the link may function using a frequency of or about 220 Mhz. The second communication device, via the second transceiver, may receive a confirmation from the first communication device via the first transceiver, the second communication device may cause an associated display or speaker to provide an indication to the operator that the communication link has been successfully established. Suitable indications may include an audible alert, a visual alert, a haptic alert, and the like. The operator may verify successful data transmission based on the indication, for example, by attempting to obtain information from the first communication device. Examples of obtained or obtainable information may include brake pressure readings, battery conditions, warning light status, vehicle movement, and the like. Establishing successful communications between the first communication device and the second communication device via the arming process may enhance, operational efficiency, and/or. The disclosed system may provide a HOT operator parameters from the EOT. Examples of areas where operational efficiency may be improved include enhancement of prompt detection of issues and the subsequent timely deployment of corrective actions, as well as improved train handling and the management of inter-car forces, and the interaction with signaling equipment. Examples of enhanced compliance may relate to regulatory requirements for train operations, improved implementation of safety protocols, and the like.

Transmissions between the first and second communication device may be regulated and may require compliance to standards. Certain standards require that information such as battery condition, valve circuit status, marker light status, brake status, and/or brake pressure, among other information, be transmitted via open broadcast or decryptable using known protocols thus making the information contained in the communication susceptible to interception and interpretation by third-party devices. For example, AAR S-9152 provides a non-exhaustive list of information that may need to be transmitted via open broadcast, and provides a specific format for the transmission of such information, including: bit sync^{a/} (69 bits), frame sync^{a/} (11 bits), chaining bits (2 bits), device battery condition (2 bits), message type identifier (3 bits), unit address code (17 bits), rear brake pipe status and pressure (7 bits), spare (1 bit), % battery charge (7 bits), valve circuit status (1 bit), confirmation indicator (1 bit), air turbine/generator equipped (1 bit), motion detection (1 bit), marker light status (1 bit), basic block BCH code (18 bits), and trailing bit (1 bit), for a total length of 144 bits.

Transmissions may include a variety of information associated with the performance, operation, health and status, and/or testing of the EOT vehicle, among other information. Transmissions from the first communication device of the EOT may occur at varying intervals or in response to determined inputs, depending on certain circumstances. For example, immediately after a variation in the rear car brake pipe pressure of ± 2 psig and at intervals of not greater than 70 seconds when the variation in the rear car brake pipe pressure over the 70-second interval is less than ± 2 psig.

In consideration of such requirements, conventional communication devices generally transmit defined information types via open broadcast.

Other information not subject to the requirements and regulations may include wayside information, global positioning system (GPS) information, sensor, audio, image, and/or video data generated by one or more sensors or cameras positioned on the EOT vehicle and/or elsewhere on the train. Additional information may include, for example, sensor data containing one or more of location data (GPS or otherwise), last car brake pipe pressure, motion status, marker light status, emergency baking valve status, battery health or State of Charge (SoC), and hand brake position, amongst other information. The existing communication pathway (unencrypted per regulation and requirements) might be one alternative solution to move this other information, in contrast to the system disclosed herein.

As noted, such information of the second type may include data communicated between the vehicle and a central control system (e.g., central dispatch and/or wayside devices, such as wayside interface units (WIUs), radios, track communication devices, and other equipment positioned throughout a track network, amongst others). For example, based upon the location or position of the vehicle with respect to a wayside device, the vehicle may transmit an interrogation signal, which "wakes up" a wayside device, such that it enters an active state. In this active state, and based at least in part upon the nature and content of the interrogation signal, the wayside device may transmit data associated with the track, the environment, a configurable device (e.g., a switch), the device itself, or other specified information. Specifically, the information may include wayside device data (e.g., information or data associated with a wayside device or its components, for example, the status of a switch or gate), power level data (e.g., the actual, desired, sensed, measured, or specified power level of the transmission), interval frequency data (e.g., the actual, desired, sensed, measured, or specified reporting interval of the transmission), frequency data (e.g., the actual, desired, sensed, measured, or specified transmission frequency), communication protocol data (e.g., the actual, desired, sensed, measured, or specified communication protocol of the transmission), or a combination thereof. such information may have proprietary value to the operator and unnecessarily transmitting such information via open broadcast will render it vulnerable to interception, interpretation, and/or manipulation by third parties-including competitors and/or malevolent actors. Likewise, transmitting information that does not require compliance with an industry standard in a decrypted format may reduce or eliminate a verifiable source of the transmitted information, which renders operators vulnerable to the receipt of false or misleading signals masquerading as information transmitted by the EOT vehicle.

The system shown in Figure 1 may deploy a method of selectively securing wireless vehicle communications, differentiating between a first type of information that is required to be broadcast openly and a second type of information that has no such requirements (but may benefit from encryption and/or verification). Based on various parameters derived from information associated with or data embedded within the received information,, the first communication device may determine whether the received information includes information of a first type not to be encrypted before transmission to the second communication device or the second type that is not regulated and may be encrypted. To help make the determination of type, the system may use, for example, an identity of the information source, a data type, and/or additional data encoded within packets of the received information. The system may differentiate certain information using information that is stored in a memory of the first communication device, or alternately in another coupled device. After receiving the information from the information source, the first communication device may determine the type of information. To do so, it may compare the received information to the information stored in the memory of the first communication device to determine if the received information includes or does not include any information of a type that can (or cannot) be encrypted prior to transmission to the second communication device. Based on such a determination, the first communication device may encrypt the information of the second type that does not require compliance with a standard. The second communication device, in some embodiments, may be able to perform the same determinations as the first communication device, such that both the first and second communication devices are appropriately encrypting information prior to transmission to remain in compliance with a governing standard or regulation. Information transmitted and received by the first communication device may include plural data types, including at least the second data type to be encrypted and the first data type to remain unencrypted.

The first data type and second data type may be transmitted simultaneously, or may be transmitted at different intervals. The compression of such information may be determined by the information type as well. For example, openly broadcast information may not be compressed (in one example) while the second type of information may be compressed. As such, a decompression key may be used in place the disclosed encryption scheme. Or, in some embodiments, the second type of information may be both compressed and encrypted.

Encryption may begin with relation to the arming process. The arming process itself may implement a public-key protocol to facilitate the encryption and decryption of communications transmitted between the first communication device and the second communication device. For example, a private key for the first communication device and public key for the first communication device may be stored in the memory of the first communication device. Likewise, a private key for the second communication device and public key for the second communication device may be stored in a memory of the second communication device. When establishing the communication link, the second communication device may transmit the public key for the second communication device to the first communication device. After receiving the public key, for example in response to receiving the public key, the first communication device may transmit the public key for the first communication device to the second communication device. Based on the public key for the first communication device, the second communication device may generate a shared secret key for the second communication device that corresponds to the private key for the second communication device. Based on the public key for the second communication device, the first communication device may generate a shared secret key for the first communication device that corresponds to the private key for the first communication device.

Encrypted communications may be decrypted via the shared secret keys. Since the first and second communication devices may distinguish between information that can and cannot be encrypted, the first and second communication devices may selectively encrypt some (second type) information while transmitting other (first type) information in a required, unencrypted, open format. Accordingly, proprietary information can remain protected from inadvertent interception while preserving regulatory compliance with governing standards. Moreover, the first and second communication devices may verify the source of received transmissions via the public-key protocol to significantly reduce the risk of spoofing by malevolent actors. The system shown in Figure 1 may utilize a public-key protocol. Suitable public key protocols may include Diffie-Hellman, Rivest-Shamir-Adleman, Elliptic Curve Diffie-Hellman, Kerberos, Quantum Key Distribution, and/or Internet Key Exchange, amongst others. In one embodiment, distributed ledger microtransactions may be used to authenticate and/or validate transmissions.

Suitable second types of information may include one or more of hand brake positioning, vehicle location information, vehicle speed, fuel level, vibration or impact data, operator health and alertness data, wind speed, ambient temperature and/or pressure, weather information, wheel slippage data, wayside equipment status information, horn operation data, video data, and vehicle orientation. Suitable wayside equipment status information may include crossing health and/or position, track switch positioning and health, infrastructure health, and the like.

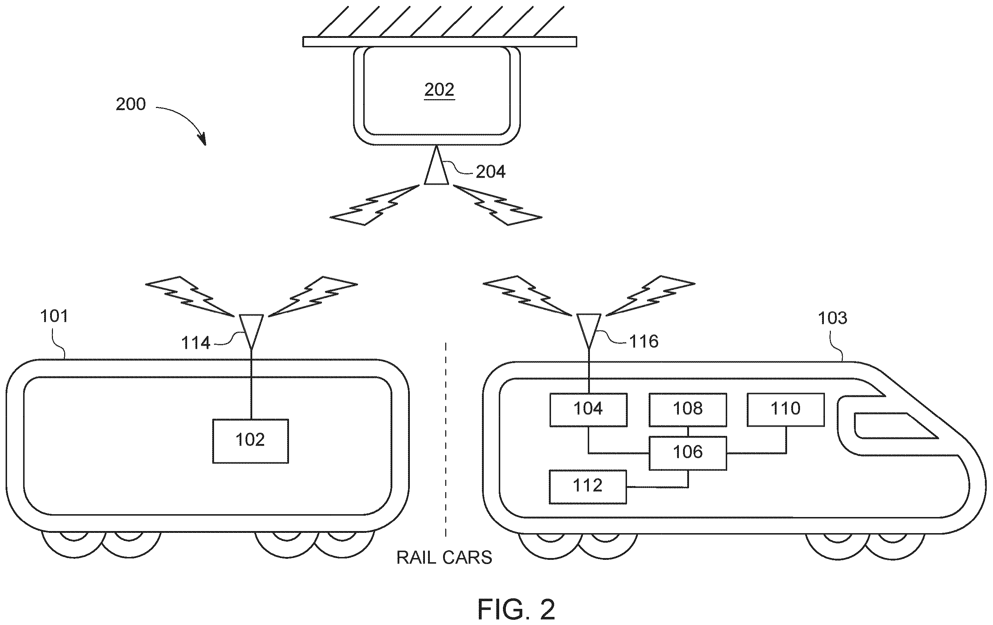

Referring now to Figure 2, a system diagram of another system 200 for selectively securing wireless vehicle communications is depicted in accordance with one embodiment. The system shown in Figure 2 is notably similar to the system shown in Figure 1. However, the system may further include a wayside station, back office, and/or other remote node 202 relative to the EOT vehicle and the HOT vehicle of the train. A suitable back office may include, for example, a back-office server communicatively coupled to a third transceiver 204. The third transceiver may receive and transmit information to and from the first and second communication devices. The remote node may be communicatively coupled to a separate transmitter and/or receiver in lieu of the third transceiver, as desired.

The remote node may remain stationary relative to the EOT vehicle and the HOT vehicle of the train. As the EOT vehicle and the HOT vehicle vary in distance relative to the remote node, it may be desirable to establish a longer-range communication link between the first and second communication devices or handoff to successive devices. Suitable links may include Wi-Fi, cellular, or satellite link, rather than a more geographically oriented communication link. Using a remote node, the system may benefit from enhanced processing capabilities. Systems with more processing capabilities may be desirable for enhanced train operations, including advanced collision controls, overspeed checks, and/or unauthorized movement preventions, all of which may benefit from the enhanced processing provided by remote node.

According to some non-limiting aspects of this disclosure, the remote node may include a positive vehicle control ("PVC") system, or a monitoring system utilized by a vehicle to allow the vehicle system to move outside of a designated restricted manner. A suitable PVC system may be the I-ETMS positive train control system available from Wabtec Corporation. The PVC system may handle vehicle operation such as movement above a designated penalty speed limit, responsiveness to receipt or continued receipt of one or more signals, and the like. The one or more signals may include designated criteria and/or characteristics (e.g., designated waveforms, content, etc.) and/or may be received at designated times or in accordance with other designated time criteria. The signals may be received under other designated conditions. The remote node may include a "negative" vehicle monitoring system that does not allow vehicles to move unless a determined signal or set of information is received.

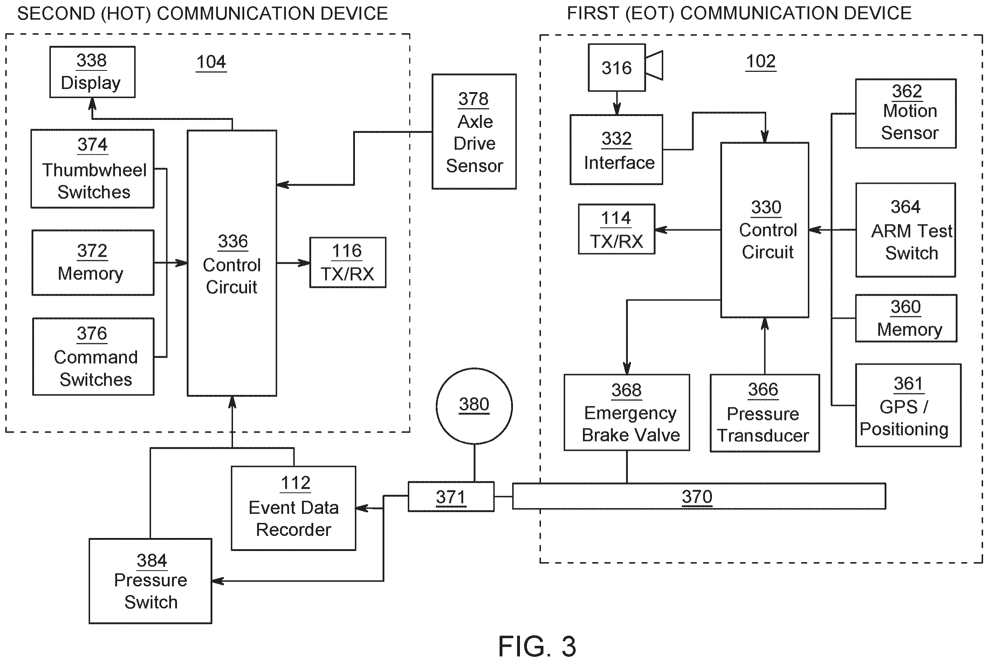

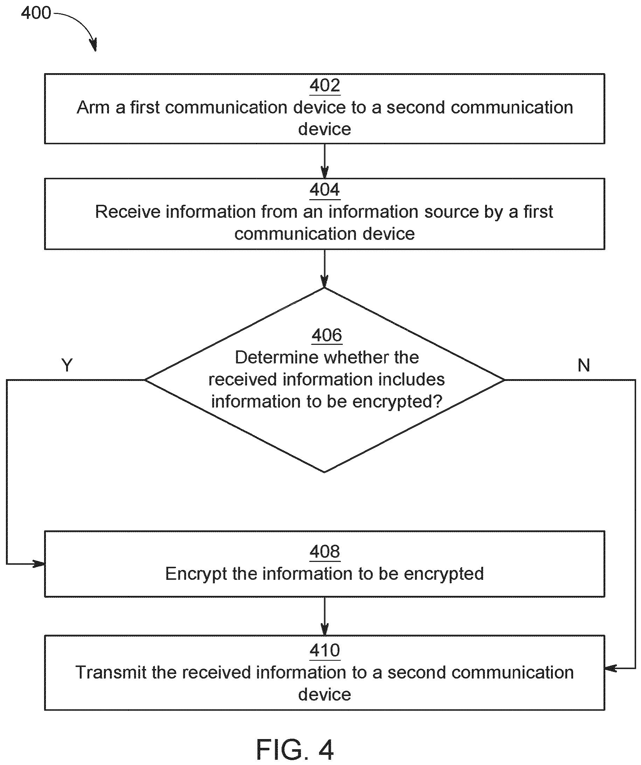

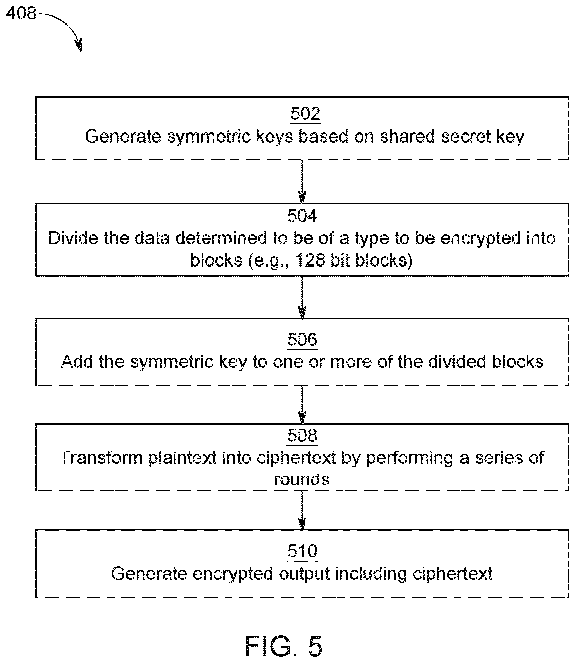

Referring now to Figure 3, a block diagram of the first communication device and the second communication device is depicted in accordance with one embodiment. As shown in Figure 3, the first communication device may be mounted on a trailing coupler of the EOT vehicle. The first communication device may include a first control circuit 330 and a first memory 360. A suitable memory may be a nonvolatile memory to store program instructions, data, or other information, for example. The first memory may store instructions that, when executed by the first control circuit, causes the first communication device to perform the functionality disclosed herein, such as for example the functionality described with reference to Figures 4 and 5. With reference back to Figure 3, the first memory may store a unique identifier, one or more keys for the first communication device, and/or information for the determination of data types.

The first control circuit may receive data from various information sources, such as a motion sensor 362, a manually activated arming and test switch 364, a brake pressure responsive transducer 366, and a position sensor 361, such as a GPS receiver. The first control circuit also may receive information from other information sources, such as one or more sensors 316, including a camera or video camera, positioned on the EOT vehicle or elsewhere on the train. In one example, data, such as video, generated by the sensors and/or position data provided by the position sensor may be deemed proprietary and not governed by a standard and, therefore, may be considered for encryption prior to transmission to the second communication device. The sensors may be controlled by the control circuit via an interface 332. A suitable interface may be a video interface. The first control circuit may provide outputs to an emergency brake control unit 368 coupled to the brake pipe 370. The brake pipe may be coupled to an airbrake control 380 via an airbrake coupling 371.

In one embodiment, the second communication device may be disposed at the HOT vehicle (e.g., the front end by direction of travel of a vehicle group), and the first communication device may be disposed at a EOT vehicle (e.g., the rear end direction of travel of the vehicle group) where it may transmit a brake application command to activate an emergency air valve disposed proximate to the second communication device within a determined period. The second communication device may transmit an acknowledgment message to the first communication device in response to receipt of a brake application command. The first communication device may repeat the brake application command if the acknowledgment is not correctly received. The second communication device, on receipt of a properly coded command from the first communication device, may respond by actuating a valve in a brake line to open the valve and cause the brake line to vent. The valve opening may be for a determined period, such as for a minimum of 15 seconds.

The second communication device may include a second control circuit 336 and second memory 372. The second control circuit may be communicatively coupled to a display device 338 and may be coupled to and receive inputs from one or more thumbwheel switches 374 through which an operator stationed on the HOT vehicle can operate the second communication device. In addition to these inputs, the second control circuit may receive inputs from a command switch 376, and/or other similar inputs. The various outputs from the second control circuit may be visually or orally provided to the operator via the display device.

The second communication device may receive information, via an axle drive sensor 378, about an axle drive of the vehicle. The axle sensor may provide a certain number of pulses per wheel revolution. The second control circuit may control the air brakes of the vehicle via airbrake controls 380, which are in fluid communication with the airbrake pipe via an airbrake coupling 371. A pressure switch 384 may be connected to the brake pipe and may provide an output to the second control circuit. The pressure switch may be used to sense and communicate information regarding the onset of an emergency brake application in response to commands received from the aforementioned emergency management system. The second communication device may be coupled to an event data recorder. Information may flow between the event data recorder and the second control circuit.

Figure 4 is an algorithmic flow diagram of a method 400 of selectively securing wireless vehicle communications in accordance with one embodiment. Instructions stored in the first memory, when executed by processors in the first control circuit, may cause the first communication device to perform the functions described in the method. The first communication device may selectively encrypt information received from one or more information sources. However, the second communication device may perform the same functions such that the first and second communication devices may selectively secure wireless communications in compliance with governing standards, while protecting proprietary information to reduce the risk of spoofing. Moreover, unencrypted data may be validated based on the encrypted data to confirm the originating source of the transmitted information, both encrypted and unencrypted. And, in some embodiments, the data types may be sorted and then compressed (or not) alone or in combination with the selective encryption.

As shown in the example of Figure 4, the method may include arming 402 a first communication device to a second communication device, as previously describe in reference to Figure 1. Transmission of information between the first communication device and the second communication device is authorized by an arming code assigned to the first communication device, which is verified by the second communication device during the arming process. The arming code may include a unique identifier associated with the first communication device, as stored in the first memory of the first communication device. During the arming process, the first and second communication device generate shared secret keys, or keys by which the first and second communication devices encrypt and decrypt transmitted information. Additionally, the shared secret keys also may be used to verify transmitted information as originating from either the first or second communication device.

The method may include receiving 404 information from one or more information sources. This may be done by the first communication device. This may be done in conjunction with the arming of the first communication device to the second communication device. The functions described in the method can be performed in varying sequences.

The method may include determining 406 whether the received information includes information to be encrypted. The determination, for example, may be made based on a comparison of data embedded within the received information to information stored in the first memory of the first communication device based on a determined regulation or standard, such as AAR S-9152.For example, the first communication device may determine whether any or all of the received information needs to remain unencrypted prior to transmission. If the first communication device determines that the received information includes information to be encrypted, the method may include encrypting 408 the information determined to be encrypted. Once the data determined to be encryptable (second type) has been encrypted (and/or compressed), the method may include transmitting 410 it to its destination. However, if the first communication device determines that the received information includes information that should not be encrypted (first type), the first communication device transmits the received information on without performing any encryption. Once received at the destination, the second type of information can be processed, which may include decryption, decompression, and/or other analysis and/or handling.

Figure 5 is an algorithmic flow diagram of a method 408 of encrypting information, in accordance with one embodiment. The method describes how the Advanced Encryption Standard algorithmic model of encryption may be employed by the first and second communication devices to selectively secure communications. Suitable algorithmic encryption models may include the International Data Encryption, Rivset-Shamir-Adelman, Triple DES, Serpent, and/or Camellia algorithms, amongst others, and may be used to achieve a similar result.

The method may include generating 502 symmetric keys based on the shared secret keys. The symmetric keys, for example, may be used for encryption and decryption of the information determined to be of a type to be encrypted in a predetermined format (e.g., 128 bits, 192 bits, 256 bits, etc.) based on a desired level of security. The method also may include dividing 504 the information determined to be of a type to be encrypted, which is presented in plaintext, into blocks of a size determined by the format of the generated symmetric key (e.g., 128 bits, 192 bits, 256 bits, etc.). The symmetric key may be added 506 to one or more of the divided blocks.

The method may include transforming 508 the plaintext into ciphertext by performing a series of rounds (e.g., 10, 12, or 14 rounds) depending on the format of the symmetric key. Each round may include replacing each byte of each block with a corresponding byte from a fixed substitution table, shifting the rows of the blocks cyclically, mixing the columns of each block by applying a mathematical transformation to provide diffusion, using exclusive-OR with a generated key for each round of manipulation, wherein the round keys are derived from the generated symmetric key. According to some non-limiting aspects, the final round may omit the column mixing and may consist only of the byte substitution, row shifting, and round key adding steps. Based on the performed rounds, the method may include generating 510 an encrypted output composed of ciphertext.

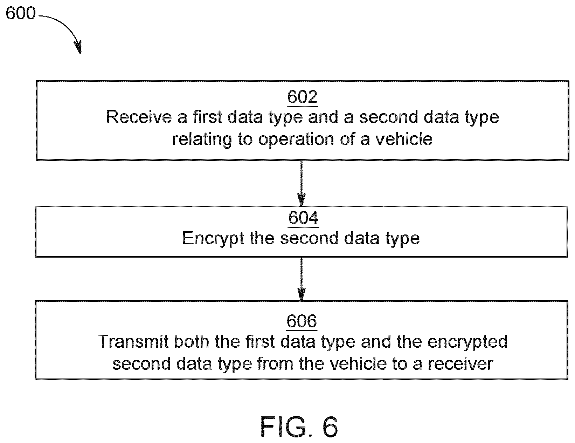

Figure 6 illustrates an algorithmic flow diagram of another method of selectively securing wireless vehicle communications in accordance with one embodiment. The method describes how communication devices may selectively encrypt information received from one or more information sources. The method may include receiving 602 the first data type and the second data type relating to the operation of a vehicle from one or more information sources. The first data type may be openly broadcast information, and the second type may be encryptable information. The data fed to the communication device for type determinations may include, for example, first type open broadcast information including one or more of a last car brake pipe pressure, a motion status, a marker light status, an emergency braking valve status, a battery health status, and a battery state of charge. The method may include encrypting 604 the second data type. With reference back to Figure 6, once the second data type is encrypted, the method may include transmitting 606 the received information.

Optional additional steps to the method may include arming a first communication device or end of vehicle device with or without exchanging an encryption key and an identifier during the arming of the end of vehicle device, compressing data, staggering transmission times, multiplexing signals, checking signal strengths, decrypting and/or decompressing upon receipt, and responding to the transmitted information. According to other aspects, the method may include generating a shared encryption key based at least in part on one or both of a determined key and an exchanged identifier.

The method of Figure 6 may include, during operation of the vehicle, receiving and comparing global positioning system (GPS) information about a location of a transmitter configured to transmit both the encrypted first data type and the second data type and a location of a receiver that can receive the encrypted first data type and the second data type. The transmitter and the receiver, for example, may both be disposed on the vehicle.

The encryption step may include embedding a second key in the second data type to authenticate the encrypted second data type as originating from the vehicle. Other aspects of the method include determining a pressure variation in a brake pipe, determining if the pressure variation is greater or lower than a threshold value, and then responding to the determination. If, for example, the pressure variation over a 70 second interval is greater than 2 psig, transmitting a signal to that effect, and then responding to a breach of threshold. Alternatively, the method may include determining that a pressure value is higher than desirable, and actuating a bleed valve to open to cause a brake line to vent and lower the pressure in the brake line to be less than the threshold value. The method may include validating the first and/or second data types as originating from the appropriate vehicle based on the encrypted key located in the second data type.

A method may include receiving information from an information source by a first communication device; determining whether the received information has information both of a type to be and not to be encrypted before transmitting the received information to a second communication device. Transmission of the received information from the first communication device to the second communication device is authorized by an arming code assigned to the first communication device and verified by the second communication device; and based at least in part on the determination, either encrypting the information of the type to be encrypted, generating encrypted information, and transmitting the received information comprising the encrypted information from the first communication device to the second communication device; or transmitting the received information from the first communication device to the second communication device unencrypted.

Encrypting the information of the type to be encrypted may embed a first key to authenticate the encrypted information as originating from the first communication device; or the method receives encrypted information generated by the second communication device, and the encrypted information generated by the second communication device has a second key to authenticate the encrypted information generated by the second communication device as originating from the second communication device; or a combination thereof. Alternatively, the received information may include wayside information associated with the first communication device; the received information has sensor data; and/or the method may determine a pressure variation in a brake pipe over a determined interval. A suitable determined interval may be a 70 second interval. A suitable variation may be that is greater than, less than, or equal to 2 psig. The method may include transmitting unencrypted data at an interval of not greater than 70 seconds when the pressure variation in a pressure of the rear car brake pipe over the 70 second interval is less than ±2 psig. Each of the interval and the variation value may be selected with reference to application specific parameters. The second communication device may be disposed at a front end by direction of travel of a vehicle group, and the first communication device is disposed at a rear end by direction of travel of the vehicle group, the method further may include one or more of transmitting a brake application command from the first communication device to activate a valve disposed proximate to the second communication device within a determined period, transmitting an acknowledgment message from the second communication device to the first communication device in response to receipt of a brake application command, and the first communication device repeating the brake application command if the acknowledgment is not correctly received, and the second communication device, on receipt of a command from the first communication device, responding by actuating the valve to open for a minimum of 15 seconds to cause a brake line to vent; or the method further has validating unencrypted data as originating from the first communication device using encrypted data; or any combination thereof.

A system may have a first communication device, the first communication device may include a transmitter; a control circuit and a memory to store instructions that, when executed by the control circuit, cause the first communication device to receive information from an information source; determine whether the received information has information of a type to be encrypted before transmitting the received information to a second communication device that is remotely located from the first communication device. Transmission of the received information from the first communication device to the second communication device is authorized by an arming code assigned to the first communication device; and based on the determination, either: encrypt the information of the type to be encrypted, generating encrypted information, and cause the transmitter to transmit the received information may include the encrypted information from the first communication device to the second communication device; or cause the transmitter to transmit the received information from the first communication device to the second communication device unencrypted. A receiver may receive information from a sensor, and the received information has sensor data; or the sensor has a camera, and the sensor data may have video data; or a combination thereof.

Alternatively, to encrypt the information of the type to be encrypted, the instructions may cause the first communication device to embed a first key in the information of the type to be encrypted to authenticate the encrypted information as originating from the first communication device; to transmit the received information comprising the encrypted information from the first communication device to the second communication device the instructions, when executed by the control circuit, cause the transmitter to transmit the received information may include the encrypted information from the first communication device to a third communication device that is remotely located from the first communication device and the second communication device; the system has a receiver to receive wayside information associated with the first communication device; or the system has a receiver to receive information from a global positioning receiver, and the received information has positioning information associated with the first communication device.

A method may include obtaining plural data types from a vehicle, the plural data types may include a first data type and a second data type; encrypting the second data type; transmitting both the first data and the second data type from the vehicle to a receiver; and decrypting the encrypted second data type. An encryption key may be exchanged with an identifier during an arming step. A shared encryption key may be generated based at least in part on one or both of a determined key and an exchanged identifier. During operation of the vehicle, the method may include obtaining and comparing GPS information of a transmitter that can transmit the first data type and the second data type and a receiver that can receive the first data type and the second data type, and the transmitter and the receiver both being disposed on the vehicle; or a combination thereof.

While one or more embodiments are described in connection with a rail vehicle system, other suitable vehicles may include automobiles, trucks (with or without trailers), buses, marine vessels, aircraft, mining vehicles, agricultural vehicles, or other off-highway vehicles. The vehicle systems described herein (rail vehicle systems or other vehicle systems that do not travel on rails or tracks) may be formed from a single vehicle or multiple vehicles. With respect to multi-vehicle systems, the vehicles may be mechanically coupled with each other (e.g., by couplers) or logically coupled but not mechanically coupled. For example, vehicles may be logically but not mechanically coupled when the separate vehicles communicate with each other to coordinate movements of the vehicles with each other so that the vehicles travel together (e.g., as a convoy).

As used in any aspect herein, the term "control circuit" may refer to, for example, hardwired circuitry, programmable circuitry (e.g., a computer processor comprising one or more individual instruction processing cores, processing unit, processor, microcontroller, microcontroller unit, controller, digital signal processor (DSP), programmable logic device (PLD), programmable logic array (PLA), or field programmable gate array (FPGA)), state machine circuitry, firmware that stores instructions executed by programmable circuitry, and any combination thereof. The control circuit may, collectively or individually, be embodied as circuitry that forms part of a larger system, for example, an integrated circuit (IC), an application-specific integrated circuit (ASIC), a system on-chip (SoC), desktop computers, laptop computers, tablet computers, servers, smart phones, etc. Accordingly, as used herein "control circuit" includes, but is not limited to, electrical circuitry having at least one discrete electrical circuit, electrical circuitry having at least one integrated circuit, electrical circuitry having at least one application specific integrated circuit, electrical circuitry forming a general purpose computing device configured by a computer program, electrical circuitry forming a memory device, and/or electrical circuitry forming a communications device.

In one embodiment, the control circuit may include a policy engine that may apply one or more policies. These policies may be based at least in part on characteristics of a given item of equipment or environment. With respect to control policies, a neural network can receive input of a number of environmental and task-related parameters. These parameters may include, for example, operational input regarding operating equipment, data from various sensors, location and/or position data, and the like. The neural network can be trained to generate an output based on these inputs, with the output representing an action or sequence of actions that the equipment or system should take to accomplish the goal of the operation. During operation of one embodiment, a determination or calculation can occur by processing the inputs through the parameters of the neural network to generate a value at the output node designating that action as the desired action. This action may translate into a signal that causes the vehicle to operate. This may be accomplished via back-propagation, feed forward processes, closed loop feedback, or open loop feedback. Alternatively, rather than using backpropagation, the machine learning system of the control circuit may use evolution strategies techniques to tune various parameters of the artificial neural network. The control circuit may use neural network architectures with functions that may not always be solvable using backpropagation, for example functions that are non-convex. In one embodiment, the neural network has a set of parameters representing weights of its node connections. A number of copies of this network are generated and then different adjustments to the parameters are made, and simulations are done. Once the output from the various models is obtained, it may be evaluated on its performance using a determined success metric. The best model is selected, and the vehicle control circuit executes that plan to achieve the desired input data to mirror the predicted best outcome scenario. Additionally, the success metric may be a combination of the optimized outcomes, which may be weighed relative to each other.

As used herein, the term wireless vehicle communications refers to the technology and systems that enable vehicles to communicate with each other and with external infrastructure without the use of physical connections, such as cables. This communication may occur through various wireless technologies, including, without limitation, Wi-Fi, cellular networks, Bluetooth, ultra-high radio frequency networks, satellite communication networks, or dedicated short range communications (DSRC). Wireless vehicle communications may enhance safety, efficiency, data protection, and convenience in transportation systems. A "communication link" refers to the connection or pathway that enables the transmission of data between two or more entities, such as devices, systems, or networks. The communication link may involve wireless media such as radio waves, microwaves, or satellite. The communication link ensures that information can be exchanged effectively and may include components like transmitters, receivers, and transmission mediums.

This written description uses examples to disclose several embodiments of the subject matter, including the best mode, and to enable one of ordinary skill in the art to practice the embodiments of subject matter, including making and using any devices or systems and performing any incorporated methods. The patentable scope of the subject matter is defined by the claims, and may include other examples that occur to one of ordinary skill in the art. Such other examples are intended to be within the scope of the claims if they have structural elements that do not differ from the literal language of the claims, or if they include equivalent structural elements with insubstantial differences from the literal languages of the claims.

## Claims

1. A method, comprising:
receiving a first data type and a second data type relating to operation of a vehicle;
encrypting the second data type; and
transmitting both the first data type and the encrypted second data type from the vehicle to a receiver.

2. The method of claim 1, further comprising:
arming an end of vehicle device having a transmitter that is configured to transmit both the first data type and the encrypted second data type to couple the transmitter to the receiver; and
exchanging an encryption key and an identifier during the arming of the end of vehicle device.

3. The method of claim 2, further comprising generating a shared encryption key based at least in part on one or both of a determined key and an exchanged identifier.

4. The method of claim 1, further comprising:
determining last car brake pipe pressure, motion status, marker light status, emergency braking valve status, battery health status, and battery state of charge to be first type of data; and
determining hand brake positioning, location information, vehicle speed, fuel level, vibration or impact data, operator health and alertness data, wind speed, ambient temperature and/or pressure, weather information, wheel slippage data, wayside equipment status information, horn operation data, video data, and vehicle orientation to be second type of data.

5. The method of claim 1, further comprising, during operation of the vehicle, receiving and comparing global positioning system (GPS) information about a location of a transmitter that is configured to transmit both the encrypted first data type and the second data type and a location of a receiver that is configured to receive the first data type and the encrypted second data type, with the transmitter and the receiver both being disposed on the vehicle.

6. The method of claim 1, wherein encrypting the second data type comprises embedding a first key in the first data type to authenticate the encrypted first data type as originating from the vehicle.

7. The method of claim 1, further comprising determining a pressure variation value in a brake pipe over a determined time interval is greater than a determined threshold value; and responding to the determination if it is over the determined threshold.

8. The method of claim 1, further comprising:
measuring a brake line pressure;
determining if the brake line pressure is outside of a determined pressure window; and
confirming that a valve has been actuated to vent in response to a determination that the brake line pressure is outside of the determined pressure window.

9. The method of claim 1, further comprising validating the first and second data types originated from the vehicle based at least in part on the encrypted key in the second data type.

10. A communication system, comprising:
a control circuit that is configured to receive information relating to operation of a vehicle, sort the received information into a first data type and a second data type, and encrypt the second data type; and
a transmitter that is controlled by the control circuit and is configured to transmit both the first data type and the encrypted second data type to a receiver.

11. The system of claim 10, wherein the control circuit is further configured to:
arm a first communication device to couple the transmitter to the receiver; and
exchange an encryption key and an identifier during the arming of the first communication device.

12. The system of claim 10, wherein the control circuit is further configured to generate a shared encryption key based at least in part on one or both of a determined key and an exchanged identifier.

13. The system of claim 10, wherein the control circuit is further configured to embed a first key in the first data type to be encrypted to authenticate the encrypted first data type as originating from the transmitter.

14. The system of claim 10, further comprising the receiver disposed in a second communication device, and the receiver is configured to receive both the first data type and the encrypted second data type.

15. The system of claim 10, wherein the first data type comprises one or more of brake pipe pressure, motion status, marker light status, emergency braking valve status, battery health status, and battery state of charge; and the second data type comprises one or more of hand brake positioning, location information, vehicle speed, fuel level, vibration or impact data, operator health and alertness data, wind speed, ambient temperature and/or pressure, weather information, wheel slippage data, wayside equipment status information, horn operation data, video data, and vehicle orientation.

16. The system of claim 15, further comprising a first communication device that includes the communication system comprising the control circuit that is configured to receive information relating to operation of the vehicle, sort the received information into the first data type and the second data type, and encrypt the second data type; and the transmitter that is controlled by the control circuit and is configured to transmit both the first data type and the encrypted second data type to the receiver, and which is disposed on an end vehicle of a plurality of coupled vehicles.

17. The system of claim 10, further comprising a third communication device that is stationary and located at the wayside of a route over which a vehicle carrying the communication system comprising the control circuit that is configured to receive information relating to operation of the vehicle, sort the received information into the first data type and the second data type, and encrypt the second data type; and the transmitter that is controlled by the control circuit and is configured to transmit both the first data type and the encrypted second data type to the receiver, travels.

18. A method, comprising:
sorting information into a first data type and a second data type relating to operation of a vehicle;
encrypting the second data type;
transmitting both the first data type and the encrypted second data type to a receiver; and
arming an end of vehicle device having a transmitter that transmits both the first data type and the encrypted second data type to couple the transmitter to the receiver.

19. The method of claim 18, further comprising generating a shared encryption key based at least in part on one or both of a determined key and an exchanged identifier.

20. The method of claim 19, further comprising validating the second data type as originating from the vehicle based at least in part on the shared encryption key.
